(19) Europäisches Patentamt
European Patent Office
Office européen des brevets

(11) Publication number: 0 358 413 A1

# (12) EUROPEAN PATENT APPLICATION

(21) Application number: 89308853.4

(51) Int. Cl.[5]: G01T 1/203

(22) Date of filing: 01.09.89

(30) Priority: 02.09.88 US 239793

(43) Date of publication of application:
14.03.90 Bulletin 90/11

(84) Designated Contracting States:
AT BE CH DE ES FR GB GR IT LI LU NL SE

(71) Applicant: UNIVERSITY OF FLORIDA
207 Tigert Hall
Gainesville Florida 32611(US)

(72) Inventor: Walker, James K.
2425 NW 26th Place
Gainesville Florida 32605(US)

(74) Representative: Hedley, Nicholas James Matthew et al
TZ Gold & Company 9 Staple Inn
London WC1V 7QH(GB)

## (54) Polysiloxane scintillator composition.

(57) A scintillator for the detection and measurement of radiation is provided which comprises an optically transparent polysiloxane matrix having incorporated therein at least one scintillating substance, e.g. an aromatic hydrocarbon (such as as an oligophenylene) or an oxadiazole.

The scintillator is less prone to radiation damage than known scintillators.

EP 0 358 413 A1

# POLYSILOXANE SCINTILLATOR COMPOSITION

## BACKGROUND OF THE INVENTION

### Field of the Invention

The present invention relates to novel plastic scintillators.

### Description of the Prior Art

Scintillation materials are used in the detection and measurement of radiation. Scintillators are composed of substances which are capable of absorbing energy given off by the fission fragments emitted by radioactive elements. The absorbed energy excites fluorescent materials contained in the scintillator, so that the fluorescent materials give off light. Such scintillators are useful in many different applications, e.g., the detection of radioactive mineral deposits, and the detection and measurement of radioactive contamination.

When radiations comprising electrically charged particles such as α-rays and β-rays penetrate a certain substance, they ionize, excite or dissociate atoms or molecules of the substance at the cost of their energy. On the other hand, the energy thus lost by the radiation and accumulated in the substance is either converted into energy of the form of thermal movement or just emitted in the form of electromagnetic waves. Particularly when the substance so penetrated by the radiation is fluorescent or phosphorescent, a fair portion of the excited energy is emitted in the form of light of a wavelength in the visible zone. This phenomenon of light emission is called "scintillation". Also in the case of radiation comprising γ-rays and neutron rays which are devoid of electric charge, a similar phenomenon is induced by the action of secondary charged particles which are emitted when the radiation interact with a substance. Generally, therefore, this phenomenon is widely utilized for the detection of radiation.

Substances capable of causing the scintillation are generally called scintillators. Examples of scintillators are inorganic crystals represented by sodium iodide activated with thallium, organic crystals represented by anthracene, organic solutions represented by xylene solution of terphenyl and plastic scintillators represented by terphenylpolystyrene. These substances are extensively used as luminous bodies for the detection of radiation. Among other scintillators, particularly plastic scintillators are easy to handle and are readily moldable in desired, large shapes and, owing to these merits, have come to find utility as indispensable devices in the field of researches on cosmic rays and researches on high-energy physics by use of particle accelerators. In recent years in the field of researches on high-energy physics, development of large particle accelerators has increased demand for a great quantity of large plastic scintillators. In the properties which are expected from such plastic scintillators, high processibility has now become an important requirement besides those basic properties of scintillators in general which are represented by amount of emission and transparency.

The transparent resins heretofore used in plastic scintillators have been limited to styrene-based resins such as, for example, polystyrene and polyvinyl toluene. The plastic scintillators using these resins as their matrix resin have suffered from the disadvantage that they tend to develop micro-cracks on their surface due to a variety of reasons. For example, such a plastic scintillator more often than not utilizes the entire reflection of light on the inner surfaces therof to permit effective transfer of the light generated therein to a detector such as a photomultiplier tube. The plastic scintillator, therefore, is generally used in a highly polished state. The plastic scintillator which uses the conventional styrene-based resin, however, is liable to sustain cracks when it is polished. When the scintillator is wiped with a solvent such as alcohol to have its surface cleaned, it tends to sustain cracks while in use. Because of such defective physical properties as described above, the conventional styrene-based plastic scintillators, despite the outstanding merit of high emission efficiency, call for advanced skill and great toil on the part of users engaging in the work of polishing and handling these plastic scintillators. In applications which demand heavy consumption of large plastic scintillators, therefore, the conventional styrene-based plastic scintillators have not necessarily proved quite practical.

To overcome the drawbacks mentioned above, plastic scintillators using inexpensive acrylic resin as

matrix resin have been developed in recent years. The acrylic polymers are primarily employed for cost effectiveness in fabrication of large volume scintillators.

The generation of light from these plastics is accomplished through the addition of small amounts of many different combinations of organic molecules known to have fluorescent properties of high efficiency. These molecules include p-terphenyl and naphthalene.

Hyman, Jr., U.S. Pat. No. 3,886,082, issued May 27, 1975, discloses an example of one such plastic scintillator material. The scintillator disclosed in Hyman employs acrylic polymers and copolymers as the host plastic and bis(o-methyl styryl)benzene, perylene, tetraphenylbutadiene, diphenylanthracene, bis-(phenyloxazolyl benzene), and dimethyl bis(phenyloxazolyl benzene) as the fluorescent additive.

Siegrist et al, U.S. Pat. No. 4,180,479, issued December 25, 1979, discloses the use of various stilbene derivatives as fluorescent agents in scintillators.

The prior art scintillators have the disadvantage that none of the host polymers have been found suitable for use at temperatures up to and above 200° C. For example, the maximum temperature of non-cross-linked polyvinyl toluene is 75° C.; and that of cross-linked polyvinyl toluene is 100° C. The prior art polymers with the highest temperature resistance are the acrylic copolymers, with a maximum temperature of 150° C.

Moreover, unlike styrene-based resins acrylic resin itself is not a scintillator. These plastic scintillators, therefore, have a fatal disadvantage that they are deficient in the emission efficiency which constitutes the basic property for plastic scintillators. This particular disadvantage is corrected to some extent by having a scintillating substance such as, for example, naphthalene or styrene dissolved in a high concentration in the acrylic resin [Nuclear Instruments and Methods 169, 57-64 (1980)]. Since the improved scintillators contain the scintillating substance in a high concentration, they are inevitably deprived of the outstanding mechanical properties inherent in acrylic resin. Generally, as the scintillating substance to be contained in a high concentration in the acrylic resin, naphthalene is used in an amount of 1 to 15%, by weight, in due consideration of solubility and cost. Plastic scintillators incorporating naphthalene have a disadvantage that the time for the attenuation of light which ensues from the penetration of the scintillators by radiation is long, i.e., the response of the scintillators to the radiation is slow. These drawbacks restrict the range of applications found for the plastic scintillators using acrylic resin as their matrix resin.

It is well-known [Mattem et al, IEEE Trans NUCl. Sc. NS-21, 81 (1974)] that presently known plastic scintillators are rather sensitive to radiation damage. There are two reasons for this sensitivity. Radiation produces color centers in the body of plastic which result in a strong absorption of light. Hence, the energy calibration of the scintillator changes with time and becomes highly dependent on the location of energy deposition. Secondly, the organic fluors which have been used, degrade in their light output due to their decomposition caused by radiation [Marini et al, Radiation Damage to Organic Scintillation Materials, CERN 85-08, Geneva, Switzerland, June 26, 1985)].

To meet present day requirements mainly in the field of high energy physics and space science, it is desirable to have a plastic scintillator detector with at least one hundred times the radiation resistance of presently available plastic scintillator. These new demanding requirements are created by the higher energy and increased radiation associated with the new atom smashers such as the upgraded facilities at Fermi National Laboratory, Chicago, the Large Electron Position Facility in Geneva, Switzerland and the projected Superconducting Super Collider in the USA. In addition, extended space flights of several years duration with scintillation detectors have shown substantial degradation of scintillator performance due to radiation damage.

A radiation hard scintillating plastic is a detector which continues to function even after a massive dose, e.g., $10^7$ Rads, of radiation has been incident on the plastic. A scintillating plastic is referred to as fast, if the emitted light occurs in a short time of about one nanosecond ($10^{-9}$ seconds) after the passage of the ionizing radiation.

It is an object of the present invention to provide a novel, fast, radiation-hard scintillating plastic useful as a radiation detector which is not subject to the disadvantages associated with plastic scintillators utilized heretofore.

## SUMMARY OF THE INVENTION

The above and other objects are realized by the present invention which provides a plastic scintillating composition comprising a substantially optically transparent polydiorganosiloxane matrix having incorporated therein at least one scintillating substance.

## DETAILED DESCRIPTION OF THE INVENTION

It had been observed that the silicon-oxygen bond in silica is very resistant to radiation damage thereby preserving good optical transmission in glass at high radiation dose. Accordingly, polymers with silicon and oxygen were explored as candidates for plastic scintillators. Various polysiloxanes were found to have excellent optical transmission and extremely good resistance to radiation damage. Two such polymers are polydimethyl siloxane and polydiphenylsiloxane. For the same impairment to optical transmission in the visible range these polysiloxanes, compared to the above-mentioned organic polymer plastics, can sustain approximately one hundred times the radiation dose. The degree of physical hardness/flexibility of the polysiloxane can be tailored by the choice of appropriate organic side group to the siloxane chain, methyl, ethyl, cyclohexyl, phenyl, and more complex groups. Copolymers of two or more of the siloxanes may also be utilized.

Polysiloxanes of the following structural formula which are substantially optically transparent may be employed in the practice of the invention:

$$(R_nSiO_{\frac{4-n}{2}})_m$$

wherein: n is from 1 to 3 and m is the degree of polymerization; and

R is, e.g., lower alkyl, such as methyl and ethyl; cycloalkyl, such as cyclohexyl; phenyl; vinyl or hydrogen.

A polysiloxane wherein R is entirely methyl has no scintillating properties. It therefore requires large amounts of a scintillating substance such as napthalene, p-terphenyl or styrene, to be dissolved within it.

In a siloxane wherein some R groups are phenyl, the polymer thereof has scintillating characteristics. The polymer can then efficiently transfer electromagnetic energy into the dissolved fluorescent organic additives. Thus, phenyl-substituted polysiloxanes require lesser amounts of dissolved scintillator and are preferred. The light output from the polysiloxane scintillator depends upon the phenyl concentration of the polymer. In addition, phenyl groups enhance the bulk modulus and the radiation resistance of the plastic.

The polysiloxanes need not necessarily be linear. They may contain branch points such as

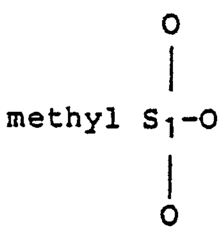

or

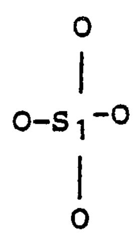

,

which introduce rigidity into the structure.

In a siloxane wherein some R groups are vinyl and others are hydrogen, cross-linking can occur with a resulting increase in toughness, tensile strength and dimensional stability of the plastic.

For the preparation of polysiloxane plastic scintillators, combinations of the above substituents have been used to produce material with desired properties. For example, the copolymer, dimethyldiphenylsiloxane, and blends of copolymers such as methylhydrodimethylsiloxane with dimethyldiphenylsiloxane copolymer, vinyl terminated produce desirable results.

The degree of polymerization, m, is at least 2. The upper limit will depend in each instance upon the nature of the R substituent and the desired properties of the resulting polymer. Those skilled in the art will be capable of determining the upper limit of the degree of polymerization for each application without the exercise of undue experimentation.

Low molecular weight silicones are liquids which, if they contain significant phenyl substitituents, can act as excellent liquid scintillators when small amounts of organic scintillating compounds such as p-terphenyl are dissolved therein. These liquid scintillators also exhibit high radiation resistance to degradation.

Scintillating substances may be incorporated in the polysiloxane in a variety of ways.

The scintillators may be dissolved in the siloxane monomer prior to polymerization such that it is

distributed or dissolved in the resulting plastic.

Alternatively, the scintillating substance may be covalently bonded to the siloxane monomer such that, upon polymerization, it is bonded to the polymeric molecule itself.

Suitable scintillating substances include aromatic hydrocarbons such as the oligophenylenes, e.g., p-terphenyl, indeno-fluorene, p-quaterphenyl, p-quinquephenyl, diphenylanthracene, dimethylterphenyl, dimethylquaterphenyl, di-t-amylterphenyl, 4,4″-bis(3-methyl-3-pentyl)terphenyl and the higher oligophenylene analogues.

Another class of suitable scintillating substance with good radiation stability is the class of oligomers of disubstituted 1,3,4-oxadiazoles which have alkoxy groups in the para position of the exterior phenyl rings.

The matrix may also comprise a copolymer, blend or interpenetrating network of a polysiloxane described above and another polymer, e.g., polystyrene, polycarbonate, polymethylmethacrylate, polyester and mixtures thereof.

Measurements [Sharn, Journal of Chemical Physics, Vol. 34, p. 240 (1961)] of the radiation resistance of p-quaterphenyl have shown it to be about two to four times more resistant than p-terphenyl (PTP) which has been used in the past as a fluor in commercial plastic scintillator. Measurements have been made of the radiation resistance of sexiphenyl with appropriate solubilizing substituents and it is much more radiation stable than quaterphenyl. The general prescription for increasingly radiation hard oligophenyls is increasing number of phenyl rings in the compound. The solubility of the oligophenyls can be modified by several techniques, one of which is the introduction of a polar ionic functional group, e.g., carboxylate preferably on a bridging carbon or other saturated carbon and another is the substitution of methyl or more complex groups at the 1 or 2 positions on terminal phenyl rings.

The solubility of each fluor in each prepolymer is different and the suitability of this method depends on the concentration of fluor which is desired. Optimal concentrations of the fluors in the polysiloxane have been found to be in the range of from about 0.1 to about 1.5% by weight; however, concentrations in the range of from about 0.01 to about 10%, by weight, are also operable.

For some applications, it is useful to introduce one or more secondary fluors into the polymer. The second fluor may be used to absorb the light emitted by the first fluor and re-emit light at longer wavelength. The long wavelength light may be a better match to the particular photo-sensitive detector external to the plastic scintillator. In addition, the longer wavelength light is less attenuated over long paths by the polymer after it has been exposed to very high radiation doses.

Suitable wavelengths shifters include diphenyl stilbene benzimidazo-benzisochinolin-7-on, 7-azamidole, 1,4-bis-[2-(5-phenyloxazolyl)]-benzene, P-bis(o-methylstyryl)benzene, tetraphenylbutadiene, 3-hydroxyflavone, coumarin, and a six ring soluble oligophenyl 7,7′-bis(4-methoxyphenol)-9,9,9′,9′-tetrakis-(2-methoxyethyl)-2,2′-bifluorene. The latter compound has particularly good radiation stability due to the large number of phenyl rings.

The polysiloxane containing a covalently bonded scintillating substance may be prepared by synthesizing one of the above scintillating substances with a vinyl substituent. The scintillating compound is mixed with a prepolymer which contains an R substituent which is hydrogen. Polymerization is then permitted to occur. The scintillating substance forms a covalent bond with the polymer through the reaction of the vinyl group and the hydrogen atom of the siloxane. Alternatively, the scintillating substance with a vinyl substituent is mixed with a prepolymer which contains an R substituent which is a vinyl group in a side chain or in a terminal position. Polymerization via a peroxide catalyst covalently bonds the scintillator to the polymer.

Any conventional method for polymerizing the siloxane may be employed. However, the types of substituents (R's), branching and molecular weight of a silicone polymer will define the optimal method of cure, cross-linking or polymerization. The high temperature vulcanizing (HTV) system approach is used for polymers containing methyl or vinyl groups. Cross-linking is achieved by addition polymerization with peroxides acting as catalysts. The prepolymer and catalyst are mixed and then heated up to 100 °C -150 °C for a period of one hour depending upon the properties of the prepolymer. During this time the mixture is kept under vacuum to ensure the absence of bubbles of gas in the final product.

A second general method of addition polymerization which may be employed is the use of a platinum complex to catalyze the addition of silicone hydrides to vinyl side chain-substituted or terminated polymers. The hydrosilation reaction occurs in the presence of 5-10 ppm platinum at elevated temperatures, e.g., about 150 °C, for a period of 20 minutes or more.

A third general method is the reaction between polyhydrosiloxane polymers and silanol terminated polymers in the presence of metal salts such as tin octoate or zinc octoate. The polymer is cured at 100-150 °C. Hydrogen gas is eliminated during the polymerization, and the reaction must therefore take place under vacuum.

An additional method involves condensation of silanol-terminated prepolymers. This reaction is acid catalyzed with water being a condensation product.

## EXAMPLE 1

A plastic scintillator based on a copolymer of dimethyl- and diphenylsiloxane was prepared as follows: 0.3%, by weight, of 2-(p-decyloxyphenyl)-5-phenyl-1,3,4-oxadiazole was admixed with equal portions of dimethylsiloxane and diphenylsiloxane. 1%, by weight, of 2,5-dimethylbis(t-butyl-peroxy)hexane was added and the mixture cured for 8 hours at 150 °C.

The characterization of this scintillating plastic was performed as follows: The efficiency of the scintillating plastic was measured by comparing its light emission intensity to that of a commercial plastic scintillator, Nuclear Enterprises type 102A.

This latter scintillator has a plastic matrix of polyvinyltoluene. Approximately 2% by weight of p-terphenyl and 0.1% by weight of (1,4-bis-[2-(5-phenyloxazolyl)]-benzene (POPOP) are dissolved in the plastic to act as a primary fluorescent substance and a waveshifter substance, respectively.

The scintillator of the invention initially had 60% light emission compared to the light emission of NE 102A scintillator. The absorption and emission spectrum of the scintillating plastic was measured and correlated with the fluor. The radiation resistance of the scintillator of the invention was measured by irradiation of the sample for a dose of $5 \times 10^6$ Rads from a $^{60}Co$ source with less than 10% effect in the amplitude of light emission. This can be compared with a 75% loss of light from the 102A type of commercial scintillator. More significantly, the plastic of the scintillator of the invention did not introduce position dependent radiation effects on the light output as all previous commercial scintillators have done in the past. It is primarily these two qualities which makes the product of the invention superior to previous plastic scintillators.

## Claims

1. A plastic scintillator comprising a substantially optically transparent polysiloxane matrix having incorporated therein at least one scintillating substance.

2. The plastic scintillator of claim 1 wherein said scintillating substance is incorporated in said polysiloxane matrix by dissolution.

3. The plastic scintillator of claim 1 wherein said scintillating substance is incorporated in said polysiloxane matrix by covalent bonding thereto.

4. The plastic scintillator of claim 1 wherein said polysiloxane has the formula:

$$(R_n SiO_{\frac{4-n}{2}})_m$$

Wherein: n is an integer from 1 to 3, inclusive,
R is selected from the group consisting of lower alkyl, cycloalkyl, phenyl, vinyl, hydrogen and may be the same or different wherein n is an integer from 2 to 3, and
m is the degree of polymerization.

5. The plastic scintillator of claim 1 wherein said polysiloxane is polydimethylsiloxane, or polydiphenylsiloxane, or a copolymer of dimethylsiloxane and diphenylsiloxane.

6. The plastic scintillator of claim 1 wherein said polysiloxane is liquid.

7. The plastic scintillator of claim 1 wherein said matrix comprises a copolymer, blend or interpenetrating network of a polysiloxane and another polymer, which other polymer is preferably selected from the group consisting of polystyrene, polycarbonate, polymethylmethacrylate, polyester and mixtures thereof.

8. The plastic scintillator of claim 1 wherein said scintillating substance is an aromatic hydrocarbon.

9. The plastic scintillator of claim 1 wherein said scintillating substance is an oligophenylene or an oxadiazole.

10. The plastic scintillator of claim 1 wherein said scintillating substance is selected from the group consisting of p-terphenyl, indeno-fluorene, p-quaterphenyl, p-quinquephenyl, diphenylanthracene, dimethylterphenyl, dimethylquaterphenyl, and an oxadiazole.

11. The plastic scintillator of claim 1 containing a plurality of scintillating substances wherein one of said scintillating substances is a wavelength shifter, which wave-length shifter is preferably selected from the group consisting of diphenyl stilbene benzimidazo- benzisochinolin-7-on, 7-azamidole, 1,4-bis-[2-(5-phenyloxazolyl)]-benzene, p-Bis,(o-methylstyrl) benzene, tetraphenylbutadiene, 3-hydroxyflavone, coumarin and 7,7′-bis(4-methyoxyphenol)-9,9,9′,9′-tetrakis-(2-methoxyethyl)-2,2′-bifluorene.

12. The plastic scintillator of claim 1 wherein said polysiloxane has incorporated therein from about 0.01 to about 10%, by weight, of said scintillating substance.

European Patent Office

# EUROPEAN SEARCH REPORT

Application Number

EP 89 30 8853

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 212 450 (EASTMAN KODAK CO.) * Abstract; pages 1, line 1 - page 5, line 14; page 6, line 3 - page 13, line 3 * | 1,7-11 | G 01 T 1/203 |
| A | US-A-3 457 180 (R. KRETZ et al.) * Column 1, line 24 - column 2, line 62 * | 1,7,8,10,11 | |

TECHNICAL FIELDS SEARCHED (Int. Cl.5)

G 01 T

The present search report has been drawn up for all claims

| Place of search | Date of completion of the search | Examiner |
|---|---|---|
| THE HAGUE | 20-11-1989 | DATTA S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document